# EUROPEAN PATENT SPECIFICATION

(11) **EP 3 665 386 B1**
(45) Date of publication and mention of the grant of the patent: **24.01.2024**
(21) Application number: 18925052.5
(22) Date of filing: 27.06.2018
(51) Int. Cl.: F03B 17/06, F03D 5/06, F03D 15/10

(54) **RENEWABLE MECHANICAL ENERGY GENERATION UNIT CAPABLE OF EFFICIENTLY REGULATING LOW, MEDIUM AND VERY HIGH KINETIC ENERGIES WITH UNSTABLE DIRECTION**
ERNEUERBARE MECHANISCHE ENERGIEERZEUGUNGSEINHEIT, DIE IN DER LAGE IST, NIEDRIGE, MITTLERE UND SEHR HOHE KINETISCHE ENERGIEN MIT INSTABILER RICHTUNG EFFIZIENT ZU REGELN
UNITÉ DE GÉNÉRATION D'ÉNERGIE MÉCANIQUE RENOUVELABLE POUVANT RÉGULER EFFICACEMENT DES ÉNERGIES CINÉTIQUES BASSES, MOYENNES ET TRÈS ÉLEVÉES PRÉSENTANT UNE DIRECTION INSTABLE

(30) Priority: 08.07.2017 TR 201710085
(43) Date of publication of application: 17.06.2020
(73) Proprietor: Grawindy Yenilenebilir Enerji Teknolojileri Yatirim Isletme Anonim Sirketi, 06530 Çankaya - Ankara (TR)
(72) Inventor: Ozturk, Atilla, 66300 Akdagmadeni/Yozgat (TR)
(74) Representative: Berkkam, Ayfer
(86) International application number: PCT/TR2018/050328
(87) International publication number: WO 2020/018025

(56) References cited:
- EP-A1- 1 806 500
- WO-A1-2011/075938
- WO-A1-2011/075938
- CN-A- 103 352 805
- CN-B- 103 321 829
- CN-B- 103 321 838
- JP-A- S5 125 643
- JP-A- S5 685 572

## Description

### Technical Field

The present invention relates to a low cost, high efficiency unit capable of converting kinetic energy from wind or water into mechanical energy.

The present invention more specifically relates to a unit which enables renewable energy to be generated with high efficiency thanks to the shaft continuously rotating in a single direction due to the motion elements rising with the effect of the wind or water and descending with gravity.

### Prior Art

Renewable energy is a type of energy which can be obtained on earth and in nature mostly without requiring a generation process. Renewable energy sources are defined with their ability to replenish themselves with a rate equal to the energy taken from the energy source or faster than the depletion rate of the source. As these sources are not fossil-based, CO2 emission occurs at a lower level while generating electrical energy. Therefore, the harm and impact on the environment is lower compared to fossil-based energy sources.

Energy sources such as water (hydraulic), wind, sun, (solar, photovoltaic), natural hot water and water steam (geothermal), organic wastes (biomass), biogas, wave force, flow energy, tide and hydrogen are major renewable energy sources.

Following the advancements in technology and the research conducted on the negative impact of the energy generated from fossil fuels on the environment, there has been a shift towards renewable energy sources.

In the known art, there are various developments aimed at generating energy from renewable energy sources.

In the China patent document no: CN103352805A in the known art, provides a connecting rod pendent type single fan blade wind-driven generator. The wind-driven generator is simple in fan blade structure, convenient to manufacture and capable of collecting wind by a single fan blade and outputting power under the blowing of breeze. The wind-driven generator comprises a fan blade, a generator, a spindle, a hollow-core transmission shaft, an upright, a connecting rod base, a first unidirectional driver, a second unidirectional driver, a reversing gear and a main transmission gear. The generator is characterized in that the connecting rod base and the upright are connected on the same body, the spindle and a shaft of the generator are connected on the same body, two ends of the spindle are provided with bearings, the outer rings of the bearings at two ends are respectively and fixedly connected with the upright and the connecting rod base, the generator is fixedly arranged at one side of the upright, the inner ring of the second unidirectional driver is fixedly arranged on the spindle, the outer ring of the second unidirectional driver is fixedly connected with one end of the hollow-core transmission shaft, the other end of the hollow-core transmission shaft is provided with the bearing, the inner ring of which is fixedly connected with the spindle, the hollow-core transmission shaft is movably connected with the exterior of the spindle through the second unidirectional driver and the bearing, the fan blade is fixedly connected with the outer ring of the hollow-core transmission shaft, and the main transmission gear is fixedly arranged on the outer ring at one end of the hollow-core transmission shaft.

In the European patent document no: EP0379626 in the known art, energy generation from the movement of blades connected to shafts is mentioned. The invention comprises a vertical main shaft, shafts secured horizontally to the main shaft and blades mounted to the shafts. The movement of the blades in the wind direction causes the connected shafts to move and the shafts move the main shaft.

In the International patent document no: WO2011116440 in the known art, a turbine used in the generation of electrical energy which can convert wind energy into mechanical energy in a controlled manner is mentioned. The invention comprises a shaft and blades connected to the shaft. The blades are secured to the shaft and they move in directions opposite to one another. It is mentioned that energy can be generated with high efficiency by means of this invention.

In the United Kingdom patent document no: GB2051252 in the known art, an apparatus developed in relation to generating energy from the wind is mentioned. The apparatus comprises a driving shaft which can rotate axially, and a blade mechanism present on both sides of the driving shaft which is mounted to and which rotates in tandem with the driving shaft. The blades horizontally rotate the shaft they are connected to by moving upwards or downwards depending on the upwind direction. The shaft which rotates on the horizontal axis sets the driving shaft in the vertical axis in motion.

Due to the wind sweeping area dimensions (blade length) of today's wind energy systems being obligated to be configured based on their compatibility with the generator, to which the mechanical energy is transmitted, there is an expectation to have a limitation in a narrow range and to obtain the problem-free/efficient, high level-low level kinetic power (wind and flow) standard from nature. It is required to conduct long-term statistical studies in order to detect the geographical areas which will meet this expectation the best.

However, the efficiency of the generated energy is low and the cost thereof is high in the mentioned patent documents.

Therefore, it is necessary to develop a low cost, high efficiency unit capable of converting the kinetic energy from wind or water into mechanical energy.

### Objectives and Brief Description of the Invention

The objective of the present invention is to develop a low cost, high efficiency unit capable of converting the kinetic energy from wind or water into mechanical energy.

Another objective of the present invention is to develop a unit which enables renewable energy to be generated with high efficiency thanks to the shaft rotating due to the motion elements rising with the effect of the wind or water and descending with gravity.

Yet another objective of the present invention is to develop a unit which enables energy to be generated with high efficiency even with low wind speed and low flow.

Still another objective of the present invention is to develop a unit which does not require a braking system in high wind speed or high flow conditions.

Another objective of the present invention is to develop a unit where said units are not damaged in high wind speed or high flow conditions.

Yet another objective of the present invention is to develop a unit where the direct effect of the kinetic energy in the nature, which has a level higher-lower than what is needed, which is undesirable for the efficiency in generation is converted into an indirect state which has a gravity or water, air lifting power-function and is positively regulated.

Still another objective of the present invention is to develop a unit which can take the sweeping areas to higher limits thanks to sort of harvesting the kinetic energies occurring at irregular-unstable powers, speeds-directions and which enables the use of different-various generators that can be activated depending on the torque size of the obtained mechanical energy, thanks to the diversity of motion elements (kinetic energy collectors), the ability to multiply the number of units and the ability to accumulate the powers via the connections.

The motion elements used in the unit of the present invention are mounted to the shafts via a single direction moving fitment system. The motion elements which move due to the effect of the wind or the water, revert to their initial positions thanks to gravity, the lifting effect of water or the rising of a gas that is lighter than air.

The single direction moving fitment system will not rotate the shaft when the motion elements move in one direction and will rotate the shaft when said elements move in the opposite direction. Thus, the shaft will always rotate in **a single** direction. The kinetic energy in the wind or the water is converted into mechanical energy thanks to the said rotating movement of the shaft.

### Detailed Description of the Invention

An example of unit provided to achieve the objective of the present invention is illustrated in the annexed drawings.

In the drawings;

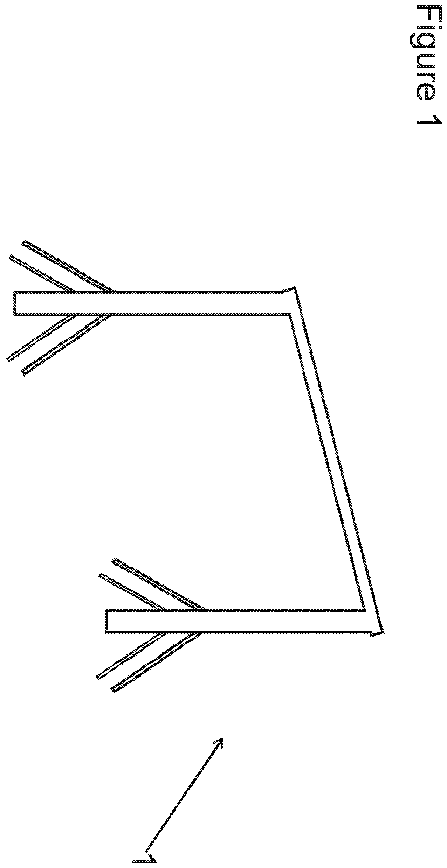

Figure 1: A schematic view of the scaffold used in the unit of the present invention.

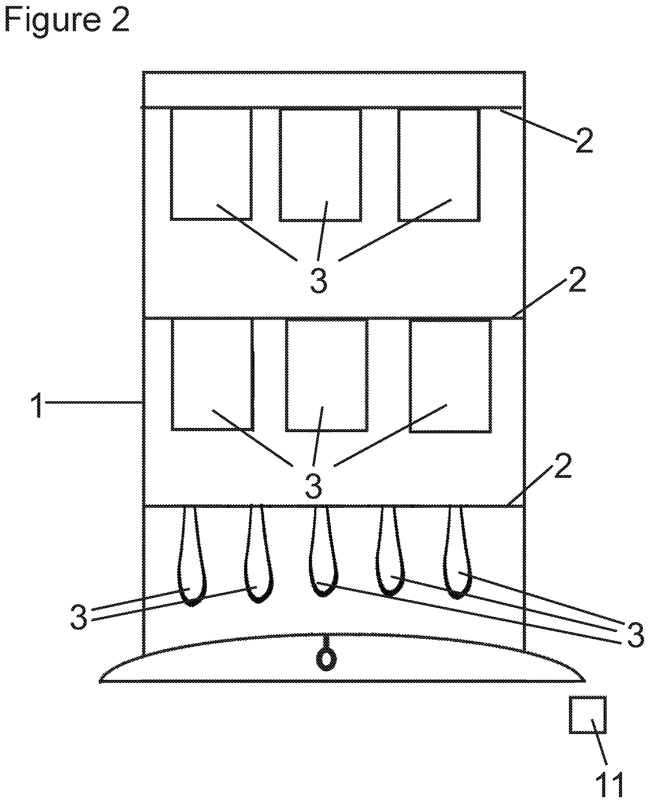

Figure 2: A frontal schematic view of an embodiment of the unit of the present invention.

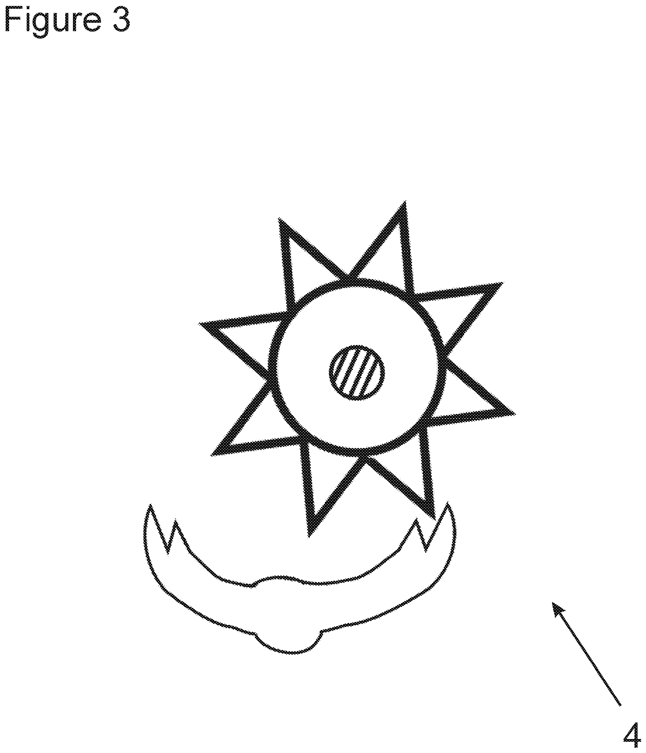

Figure 3: A schematic view of a sample single direction moving fitment useable in the unit of the present invention.

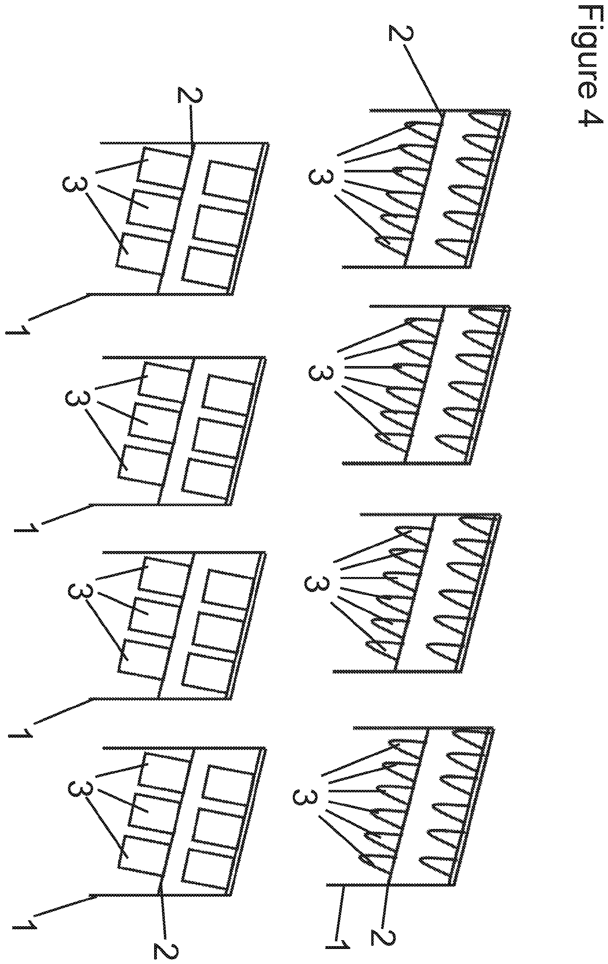

Figure 4: A schematic view of the unit of the present invention installed as multiples and positioned in various positions.

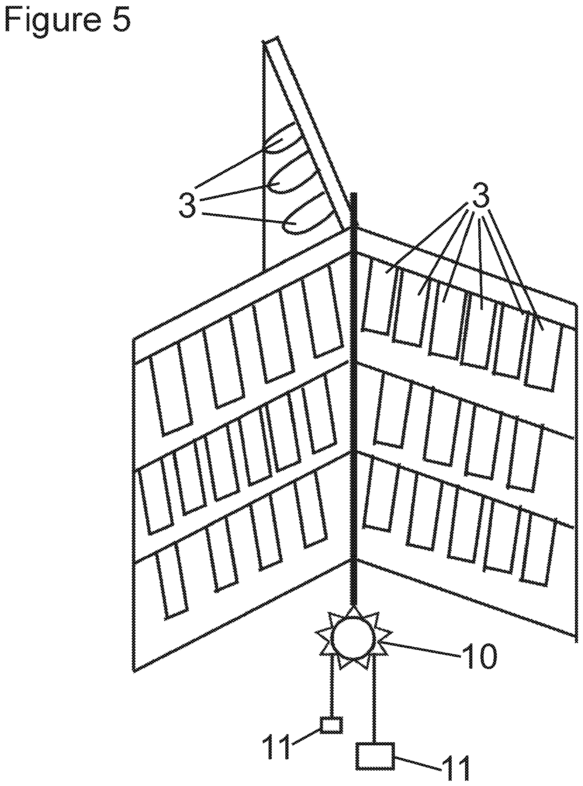

Figure 5: A schematic view of the transmission of the mechanical energy obtained from the unit of the present invention to the converter via the gear system.

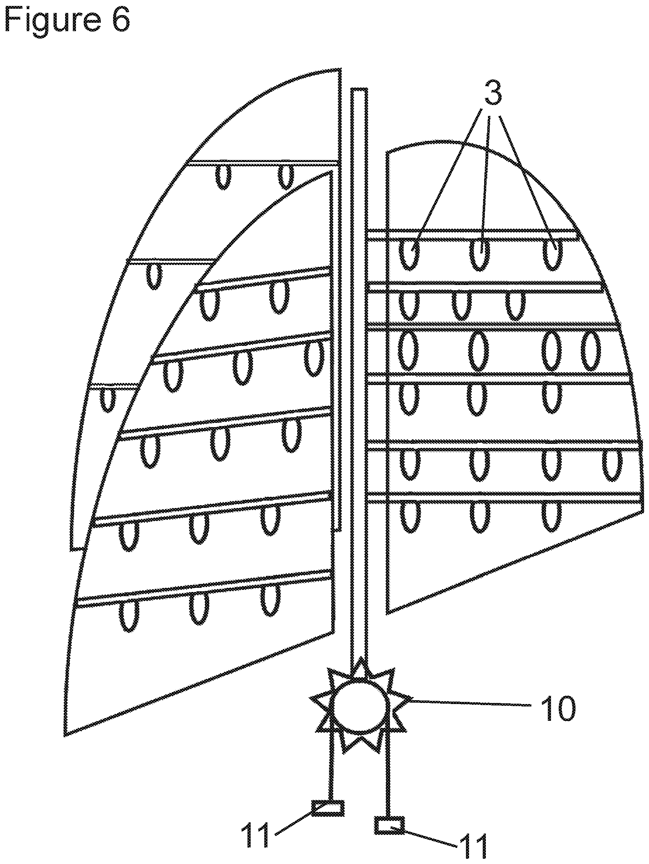

Figure 6: Another schematic view of the transmission of the mechanical energy obtained from the unit of the present invention to the converter via the gear system.

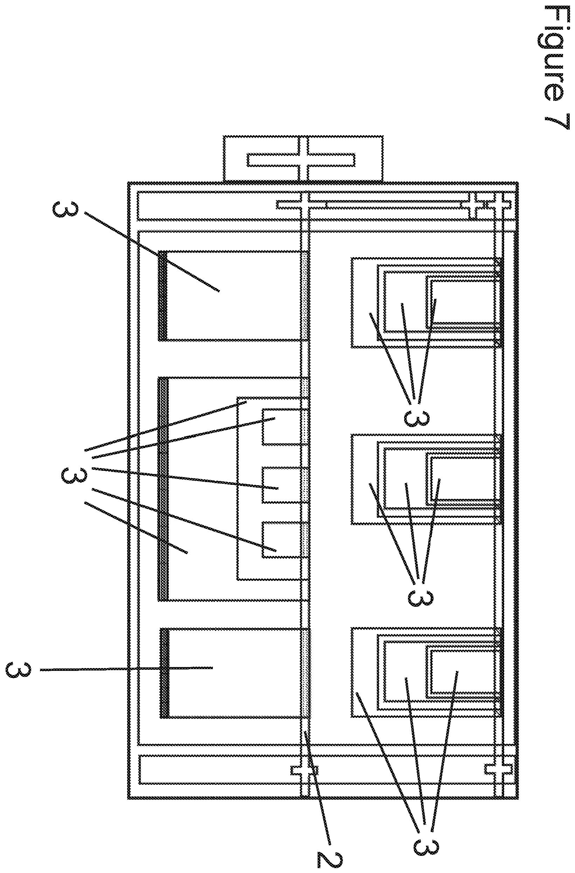

Figure 7: A frontal schematic view of the unit of the present invention.

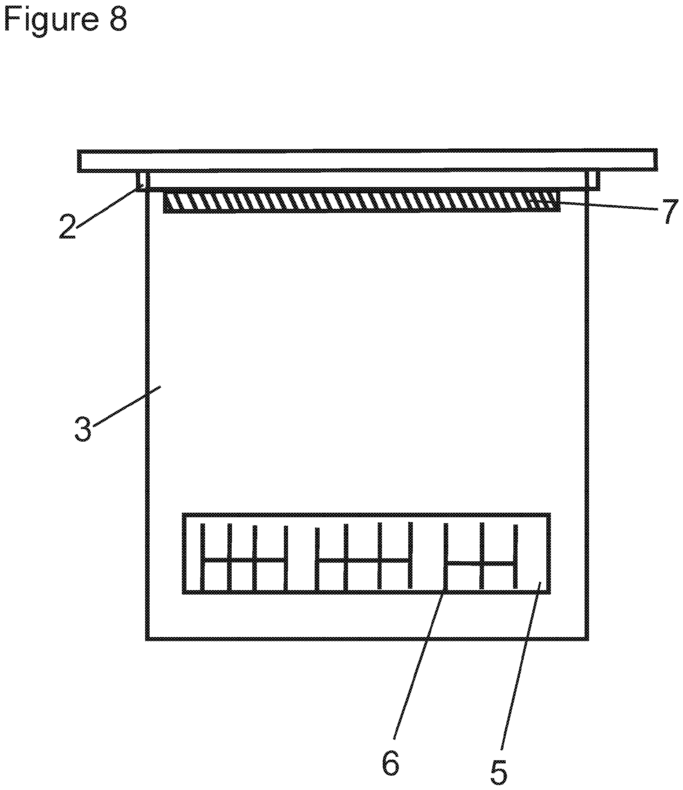

Figure 8: A schematic view of the motion element containing the solar panel, battery and the driving mechanism in the unit of the present invention.

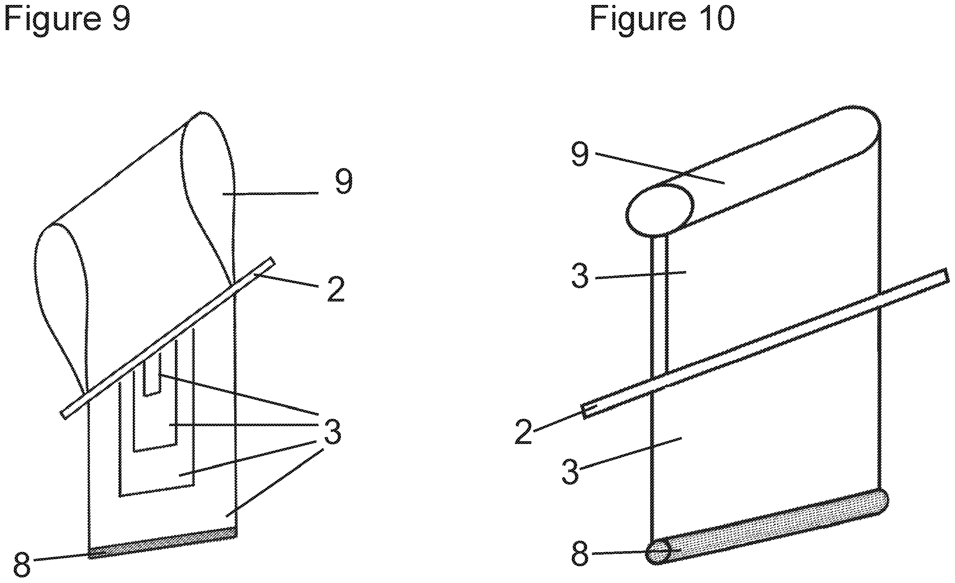

Figure 9: A schematic view of the motion element containing the weight and the air chamber in the unit of the present invention.
Figure 10: A schematic view of the motion element containing the weight and the air chamber with a cylindrical geometry and in the unit of the present invention.

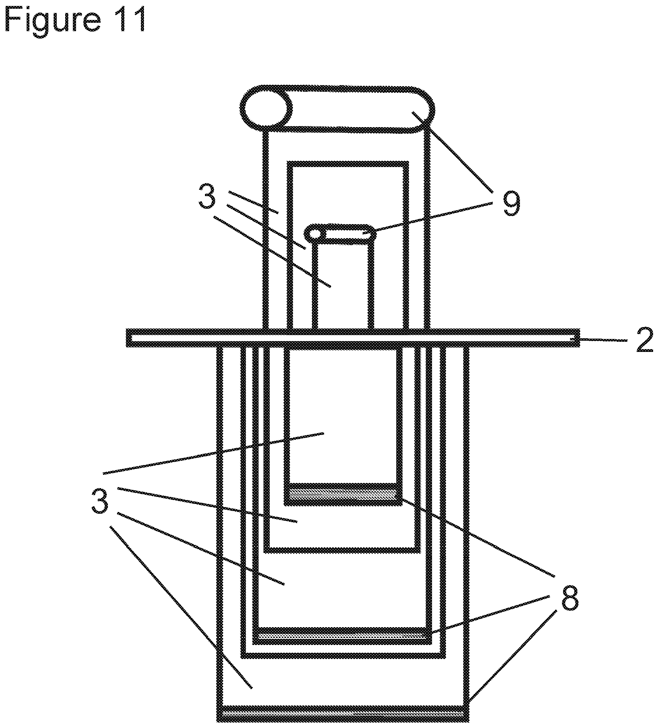

Figure 11: A frontal schematic view of the motion element containing the weight and the air chamber with a cylindrical geometry which contains the nested motion element.

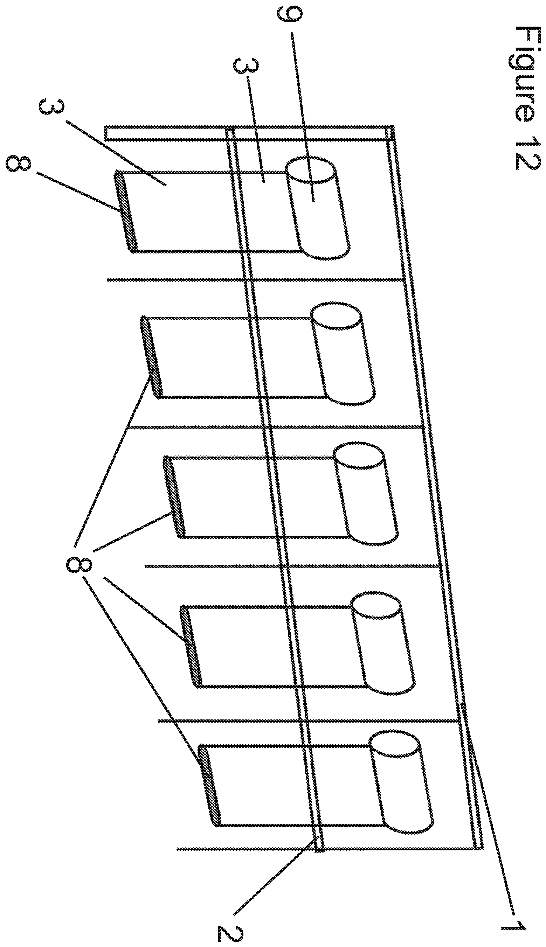

Figure 12: A schematic view of the motion elements containing the weight and the air chamber with a cylindrical geometry and in the unit of the present invention.

The pieces shown in the figures are enumerated separately, and the numbers correspond to the following:
1. Scaffold
2. Shaft
3. Moving element
4. Single direction moving fitment system sample
5. Solar panel
6. Battery
7. Driving mechanism
8. Weight
9. Air chamber
10. Gear system
11. Converter

The present invention is a unit converting the kinetic energy from wind or water into mechanical energy according to claim 1.

The unit of the present invention can be installed as multiple units and positioned in various positions to combine the powers of the units.

The motion elements (3) of the unit may be of various structures and geometries. The present invention is a unit converting the kinetic energy from wind or water into mechanical energy and further comprises a solar panel (5) and a battery (6). The present invention is a unit converting the kinetic energy from wind or water into mechanical energy and comprises a driving mechanism (7) to change the operation direction of the single direction moving fitment (4) of the unit depending on the direction of the wind or the water flow, in order to render the mechanical energy generated from the movement of the motion elements (3) more efficient. The present invention is a unit converting the kinetic energy from wind or water into mechanical energy and the driving mechanism (7) operates with a sensor. The motion element (3) of the unit of the present invention is connected to a shaft (2) via a single direction moving fitment (4). The motion element (3) which moves in the direction of the wind or the water, reverts to its initial positions thanks to gravity, the lifting effect of water or the rising of a gas that is lighter than air. Therefore, it is ensured that the motion elements (3) move continuously. For instance, the motion element (3) which rotates at a certain angle due to the wind, will revert to its initial position thanks to gravity or the lifting force of a gas lighter than air. Or, the motion element (3) which rotates at a certain angle due to the flow in the water, will revert to its initial position thanks to gravity or the lifting effect of water. The motion elements (3) will be virtually vibrating by this tidal movement in small angles, thanks to these constant movements. The movements which are in a single direction will be transferred to the shaft (2), thereby allowing the shaft (2) to continuously rotate in a single direction.

The motion element (3) rotates idly in one direction, whereas it actuates the shaft (2) to rotate with its movement in the other direction. The lack of rotation on the shaft (2) with the movement of the motion element (3) in one direction and the rotation of the shaft (2) due to movement in the other direction are enabled by the single direction moving fitment (4). The working principle of the single direction moving fitment (4) is similar to that of a ratchet wrench. The single direction moving fitment (4) rotates the shaft (2) it is connected to while moving in one direction, whereas it does not actuate any movement on the shaft (2) when said fitment rotates in the other direction. Thus, the shaft (2) will be in constant rotation due to the constant movement of the motion elements (3). By increasing the number of the utilized units or the number of motion elements (3) in each unit, the single direction movement generated by each motion element (3) is transferred collectively to the shaft (2) and it is ensured that a higher level of energy is generated by amassing the movements of each shaft (2).

The mechanical energy obtained by the movement of the shafts (2) can be converted into electrical energy by transmitting said energy to a converter (11) through the gear system (10), or said energy can be converted into various types of mechanical energy depending on the area of use.

In an embodiment of the present invention, in addition to their own weight, a weight (8) is present at the motion elements (3) located at the lower portion of the shaft (2) of an underwater unit. There is also an air chamber (9) at the motion elements (3) located at the upper portion of the shaft (2). Among the motion elements (3) that are moving due to the flow in the water, those which are at the lower portion of the shaft (2) revert to their initial positions thanks to the weights (8) they have and the effect of gravity. The motion elements (3) at the upper portion of the shaft (2), on the other hand, revert to their initial positions thanks to the air chambers (9) they have and the lifting effect of water.

Thus, the shaft (2) of the unit continuously moves and mechanical energy is generated due to the movement of the flow or the wave. Since the motion elements (3) of the unit can move even in the smallest wave or flow, mechanical energy is generated in all conditions.

By means of the unit of the invention, energy can be generated with high efficiency even with low wind speed or low amounts of water flow.

The units are not damaged at high wind speeds of high amounts of water flow and a braking system is not required.

## Claims

1. A unit converting kinetic energy from wind or water into mechanical energy, comprising:
- a scaffold (1) which forms the main structure of the unit and carries a system,
- at least one shaft (2) mounted to the scaffold (1),
- a plurality of motion elements (3), each of the motion elements (3) rotating the at least one +4e- shaft (2) by moving in the direction of the wind or water flow or in the opposite direction thereof,
- a plurality of single direction moving fitments (4) positioned inside the at least one shaft, each single direction moving fitment (4) allows each motion element (3) to be mounted to the at least one shaft (2) and rotate idly in one direction, and allowing said motion element to actuate the at least one shaft (2) to rotate by moving in the other direction, wherein the single direction moving fitments (4) allow transferring the single direction movement generated by each motion element (3) collectively to the at least one shaft (2).

2. A unit converting the kinetic energy from wind or water into mechanical energy according to Claim 1, **characterized in that** it comprises a solar panel (5), a battery (6) and a driving mechanism (7).

3. A unit converting the kinetic energy from wind or water into mechanical energy according to Claim 2, **characterized in that** the driving mechanism (7) operates with a sensor.

4. A unit converting the kinetic energy from wind or water into mechanical energy according to any of the Claims above, **characterized in that** the motion elements (3) located at a lower portion of the at least one shaft (2) of the unit, when the unit is used underwater, comprise a weight (8).

5. A unit converting the kinetic energy from wind or water into mechanical energy according to any of the Claims above, **characterized in that** the motion elements (3) located at an upper portion of the at least one shaft (2) of the unit, when the unit is used underwater, comprise an air chamber (9) containing gases lighter than air.

6. A unit converting the kinetic energy from wind or water into mechanical energy according to any of the Claims above, **characterized in that** it comprises a gear system (10) to which the mechanical energy generated by the movement of the at least one shaft (2) is transferred.

7. A unit converting the kinetic energy from wind or water into mechanical energy according to Claim 6, **characterized in that** it comprises a converter (11) for converting the energy transferred to the gear system (10) into the desired types of energy.

8. A unit converting the kinetic energy from wind or water into mechanical energy according to Claim 7, **characterized in that** the single direction movement generated by each motion element (3) is collectively transferred to the gear system (10), by increasing the number of the units or the number of the motion elements (3) used in each unit or the number of the shafts (2) used in each unit.

## Patentansprüche

1. Eine Einheit, die kinetische Energie aus Wind oder Wasser in mechanische Energie umwandelt, umfassend:
- ein Gerüst (1), das die Hauptstruktur der Einheit bildet und ein System trägt,
- mindestens eine Welle (2), die am Gerüst (1) befestigt ist,
- eine Vielzahl von Bewegungselementen (3), wobei jedes der Bewegungselemente (3) die mindestens eine Welle (2) durch Bewegung in Richtung des Windes oder der Wasserströmung oder in die entgegengesetzte Richtung dreht,
- eine Vielzahl von sich in eine Richtung bewegenden Passstücken (4), die innerhalb der mindestens einen Welle positioniert sind, wobei jedes sich in eine Richtung bewegende Passstück (4) es jedem Bewegungselement (3) ermöglicht, an mindestens einer Welle (2) angebracht zu werden und sich in einer Richtung frei zu drehen, und es dem Bewegungselement ermöglicht, die mindestens eine Welle (2) zu betätigen, um sich zu drehen, indem es sich in die andere Richtung bewegt, wobei die sich in eine Richtung bewegenden Passstücke (4) es ermöglichen, die von jedem Bewegungselement (3) erzeugte Bewegung in eine Richtung gemeinsam auf die mindestens eine Welle (2) zu übertragen.

2. Einheit zur Umwandlung der kinetischen Energie von Wind oder Wasser in mechanische Energie nach Anspruch 1, **dadurch gekennzeichnet, dass** sie ein Solarpanel (5), eine Batterie (6) und einen Antriebsmechanismus (7) umfasst.

3. Einheit zur Umwandlung der kinetischen Energie von Wind oder Wasser in mechanische Energie nach Anspruch 2, **dadurch gekennzeichnet, dass** der Antriebsmechanismus (7) mit einem Sensor arbeitet.

4. Einheit zur Umwandlung der kinetischen Energie von Wind oder Wasser in mechanische Energie nach einem der obigen Ansprüche, **dadurch gekennzeichnet, dass** die Bewegungselemente (3), die sich an einem unteren Abschnitt der mindestens einen Welle (2) der Einheit befinden, wenn die Einheit unter Wasser verwendet wird, ein Gewicht (8) umfassen.

5. Einheit zur Umwandlung der kinetischen Energie von Wind oder Wasser in mechanische Energie nach einem der obigen Ansprüche, **dadurch gekennzeichnet, dass** die Bewegungselemente (3), die sich an einem oberen Abschnitt der mindestens einen Welle (2) der Einheit befinden, unter Wasser verwendet werden, eine Luftkammer (9) umfassen, die Gase enthält, die leichter als Luft sind.

6. Einheit zur Umwandlung der kinetischen Energie von Wind oder Wasser in mechanische Energie nach einem der obigen Ansprüche, **dadurch gekennzeichnet, dass** sie ein Getriebesystem (10) umfasst, auf das die durch die Bewegung der mindestens einen Welle (2) erzeugte mechanische Energie übertragen wird.

7. Einheit zur Umwandlung der kinetischen Energie von Wind oder Wasser in mechanische Energie nach Anspruch 6, **dadurch gekennzeichnet, daß** sie einen Wandler (11) zur Umwandlung der auf das Getriebesystem (10) übertragenen Energie in die gewünschten Energiearten umfaßt.

8. Einheit zur Umwandlung der kinetischen Energie von Wind oder Wasser in mechanische Energie nach Anspruch 7, **dadurch gekennzeichnet, dass** die von jedem Bewegungselement (3) erzeugte Bewegung in eine Richtung kollektiv auf das Getriebesystem (10) übertragen wird, indem die Anzahl der Einheiten oder die Anzahl der in jeder Einheit verwendeten Bewegungselemente (3) oder die Anzahl der in jeder Einheit verwendeten Wellen (2) erhöht wird.

## Revendications

1. Unité convertissant l'énergie cinétique du vent ou de l'eau en énergie mécanique, comprenant :
- un échafaudage (1) qui constitue la structure principale de l'unité et porte un système,
- au moins un arbre (2) monté sur l'échafaudage (1),
- une pluralité d'éléments mobiles (3), chacun des éléments mobiles (3) faisant tourner l'au moins un arbre (2) en se déplaçant dans la direction du vent ou de l'écoulement de l'eau ou dans la direction opposée,
- une pluralité d'éléments mobiles unidirectionnels (4) positionnés à l'intérieur d'au moins un arbre, chaque élément mobile unidirectionnel (4) permettant à chaque élément mobile (3) d'être monté sur au moins un arbre (2) et de tourner au ralenti dans une direction, et permettant à cet élément mobile d'actionner au moins un arbre (2) pour tourner en se déplaçant dans l'autre direction, les éléments mobiles unidirectionnels (4) permettant de transférer le mouvement unidirectionnel généré par chaque élément mobile (3) collectivement à au moins un arbre (2).

2. Unité convertissant l'énergie cinétique du vent ou de l'eau en énergie mécanique selon la Revendication 1, **caractérisée par le fait qu'**elle comprend un panneau solaire (5), une batterie (6) et un mécanisme d'entraînement (7).

3. Unité convertissant l'énergie cinétique du vent ou de l'eau en énergie mécanique selon la Revendication 2, **caractérisée par le fait que** le mécanisme d'entraînement (7) fonctionne avec un capteur.

4. Unité convertissant l'énergie cinétique du vent ou de l'eau en énergie mécanique selon l'une des revendications ci-dessus, **caractérisée en ce que** les éléments mobiles (3) situés dans une partie inférieure de l'au moins un arbre (2) de l'unité lorsque l'unité est utilisée sous l'eau, comprennent un poids (8).

5. Unité convertissant l'énergie cinétique du vent ou de l'eau en énergie mécanique selon l'une des Revendications ci-dessus, **caractérisée en ce que** les éléments mobiles (3) situés dans une partie supérieure de l'au moins un arbre (2) de l'unité utilisée sous l'eau, comprennent une chambre à air (9) contenant des gaz plus légers que l'air.

6. Unité convertissant l'énergie cinétique du vent ou de l'eau en énergie mécanique selon l'une quelconque des Revendications ci-dessus, **caractérisée en ce qu'**elle comprend un système d'engrenage (10) auquel est transférée l'énergie mécanique générée par le mouvement de l'au moins un arbre (2).

7. Unité convertissant l'énergie cinétique du vent ou de l'eau en énergie mécanique selon la Revendication 6, **caractérisée en ce qu'**elle comprend un convertisseur (11) pour convertir l'énergie transférée au système d'engrenage (10) dans les types d'énergie désirés.

8. Unité convertissant l'énergie cinétique du vent ou de l'eau en énergie mécanique selon la Revendication 7, **caractérisée en ce que** le mouvement unidirectionnel généré par chaque élément mobile (3) est transféré collectivement au système d'engrenage (10), en augmentant le nombre d'unités ou le nombre d'éléments mobiles (3) utilisés dans chaque unité ou le nombre d'arbres (2) utilisés dans chaque unité.
